# FASCICULE DE BREVET EUROPEEN

(11) **EP 3 292 003 B1**
(45) Date de publication et mention de la délivrance du brevet: **01.07.2020**
(21) Numéro de dépôt: 16723440.0
(22) Date de dépôt: 04.05.2016
(51) Int. Cl.: B60C 11/03, B60C 11/12

(54) **BANDE DE ROULEMENT COMPORTANT UN BLOC PRÉSENTANT UNE PLURALITÉ DE DÉCOUPURES**
REIFENLAUFFLÄCHE MIT EINEM BLOCK MIT EINER VIELZAHL VON AUSSCHNITTEN
TYRE TREAD COMPRISING A BLOCK HAVING A PLURALITY OF CUTOUTS

(30) Priorité: 07.05.2015 FR 1554091
(43) Date de publication de la demande: 14.03.2018
(73) Titulaire: Compagnie Générale des Etablissements Michelin, 63000 Clermont-Ferrand (FR)
(72) Inventeur: MUHLHOFF, Olivier, 63040 Clermont-Ferrand Cedex 9 (FR); DURAND-GASSELIN, Benoit, 63040 Clermont-Ferrand Cedex 9 (FR)
(74) Mandataire: Demaure, Pierre-Yves
(86) Numéro de dépôt international: PCT/FR2016/051056
(87) Numéro de publication internationale: WO 2016/177974

(56) Documents cités:
- EP-A1- 1 616 719
- EP-A2- 1 800 843

## Description

### DOMAINE DE L'INVENTION

La présente invention concerne une bande de roulement d'un pneumatique pour véhicule automobile pourvu de moyens pour réduire de façon sensible le bruit en roulage.

### ETAT DE LA TECHNIQUE

De façon usuelle, les pneumatiques pour véhicule de tourisme sont pourvus d'une armature de carcasse qui est aujourd'hui radiale en grande majorité ; dans cette configuration, les renforts de l'armature de carcasse sont disposés de façon à faire un angle supérieur ou égal à 80 degrés et inférieur à 100 degrés avec une direction circonférentielle.

En outre, les pneumatiques sont pourvus d'une armature de sommet comportant une pluralité de renforts noyés dans un matériau à base d'élastomères. Cette armature de sommet est recouverte radialement à l'extérieur par une bande de roulement en matériau caoutchoutique, cette bande ayant une surface, dite surface de roulement, destinée à être en contact avec la route pendant le roulage.

Afin d'assurer un niveau de sécurité indispensable par temps de pluie notamment, il est connu de pourvoir la bande de roulement avec une pluralité de rainures longitudinales d'orientation générale circonférentielle.

Un inconvénient de la présence de rainures longitudinales est la génération de vibrations de l'air circulant dans ces rainures notamment dans le contact avec la route. Ces vibrations sont la source de résonances générant un bruit en roulage.

Le document EP0324605 divulgue une bande de roulement comportant une pluralité de blocs alignés selon une direction circonférentielle. Dans ce document, les blocs sont inclinés d'un certain angle en vue de diminuer la génération de bruit en roulage.

Le document WO2012032144 divulgue une bande de roulement comportant une pluralité de blocs allongés s'étendant selon la direction circonférentielle. Chaque bloc allongé comporte une pluralité d'incisions d'orientation globalement transversale en vue d'améliorer l'adhérence de la bande de roulement, notamment lors d'un freinage sur un sol mouillé. Les documents EP1616719 et EP1800843 divulguent un pneumatique comportant au moins un bloc allongé.

Il existe un besoin de limiter la génération de bruit d'une bande de roulement comprenant au moins un bloc allongé s'étendant selon une direction circonférentielle.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de la bande de roulement », on entend l'ensemble des points de la bande de roulement qui sont en contact avec la chaussée lorsque le pneumatique, gonflé à sa pression de référence roule sur cette chaussée. La pression de gonflage de référence est définie dans les conditions d'utilisation du pneumatique telles que définies notamment par la norme E.T.R.T.O (« European Tyre and Rim Technical Organisation »). La largeur C de la surface de la bande de roulement peut notamment être définie par la norme ETRTO tel que C= (1.075-0.005ar)*S^{1.001} avec ar le rapport nominal d'aspect et s la grosseur du boudin théorique sur une jante de mesure.

Par « bloc » sur une bande de roulement, on entend un élément en relief délimité par des rainures et comprenant des parois latérales et une face de contact, cette dernière étant destinée à venir en contact avec le sol au cours d'un roulage.

Par « bloc allongé », on entend un bloc présentant une largeur et une longueur sur la circonférence du pneumatique, cette longueur étant très supérieure à la largeur.

Par « nervure », on entend un bloc allongé qui s'étend sur toute la circonférence du pneumatique.

Par « rainure », on entend une découpure dans la bande de roulement délimitant des parois de matière, la largeur de cette découpure est telle que les parois associées à cette découpure ne peuvent pas venir en contact l'une contre l'autre dans des conditions usuelles de roulage. La largeur pour une rainure est supérieure à 2 millimètres.

Par « incision », on entend une découpure dans la bande de roulement délimitant des parois de matière, la largeur de cette découpure est appropriée pour permettre la mise en contact, au moins partielle, des parois de l'incision lors du passage dans l'aire de contact entre le pneumatique et le sol. La largeur pour une incision est inférieure ou égale à 2 millimètres.

Par « direction transversale » ou « direction axiale », on entend une direction parallèle à l'axe de rotation du pneu.

Par « direction circonférentielle », on entend une direction qui est tangente à tout cercle centré sur l'axe de rotation. Cette direction est perpendiculaire à la direction axiale.

Par « direction oblique », on entend une direction qui possède une composante axiale et une composante circonférentielle non nulles.

Par « niveau circonférentiel », on entend un ensemble de points formant une droite, cette droite étant perpendiculaire à la direction circonférentielle.

### RESUME DE L'INVENTION

L'invention concerne une bande de roulement pour pneumatique comportant au moins un bloc allongé en matériau caoutchoutique de largeur W et de longueur L avec L>>W, ce bloc allongé s'étendant selon une direction circonférentielle lorsque la bande de roulement est montée sur le pneumatique. Le bloc allongé comporte une surface de contact destinée à venir en contact avec un sol et une première paroi latérale et une seconde paroi latérale délimitant cette surface de contact. Le bloc allongé comporte une pluralité de découpures obliques débouchant alternativement sur la première paroi latérale ou sur la seconde paroi latérale et s'étendant jusqu'à des extrémités de découpures qui ne débouchent pas sur lesdites parois latérales. Les découpures de la pluralité de découpures sont réparties sur la surface de contact du bloc de sorte que lorsqu'une découpure, débouchant sur la première paroi latérale, atteint son extrémité de découpure une autre découpure débute à partir de la seconde paroi latérale, à un même niveau circonférentiel sur le bloc allongé. Les découpures sont des incisions.

L'invention propose ainsi d'assurer une continuité dans l'organisation des découpures dans le bloc allongé. En effet, lorsqu'une découpure atteint une de ses extrémités, une autre découpure débute à un même niveau circonférentiel. De cette manière, on limite la variation du taux d'entaillement selon la direction circonférentielle dans le bloc allongé et les performances acoustiques du pneumatique sont alors améliorées.

Dans une variante de réalisation, deux découpures adjacentes dans le bloc allongé se superposent selon une projection transversale.

On augmente ainsi les longueurs d'incisions dans le bloc allongé ce qui permet d'améliorer les performances d'adhérence globales du pneumatique sur un sol mouillé.

Dans une autre variante de réalisation, deux découpures adjacentes ne se superposent pas selon une projection transversale et les extrémités de ces deux découpures sont distantes d'une distance D, cette distance D ayant une composante transversale au moins égale à 10% de la largeur W du bloc allongé.

De cette manière, il est possible d'avoir une partie de gomme continue au centre du bloc allongé de largeur égale à au moins 10% la largeur W. On renforce ainsi la résistance mécanique du bloc allongé.

Dans une autre variante de réalisation, les découpures ont une forme courbe sur la surface de contact.

En utilisant des découpures de forme courbe, on améliore l'esthétisme global de la bande de roulement tout en limitant le bruit généré par le pneumatique.

Dans une autre variante de réalisation, les découpures comportent au moins deux parties d'inclinaisons différentes.

En utilisant des découpures complexes comportant au moins deux parties d'inclinaisons différentes, il est possible d'améliorer l'adhérence sur un sol mouillé tant en virage qu'en ligne droite.

Dans une autre variante de réalisation, deux découpures adjacentes dans le bloc allongé présentent des inclinaisons différentes et/ou des formes différentes et/ou des longueurs différentes.

On améliore ainsi le brouillage du signal sonore émis par le bloc allongé au cours d'un roulage.

Dans une autre variante de réalisation, les découpures sont des incisions.

On améliore l'adhérence de la bande de roulement sur sol mouillé en conservant une certaine rigidité globale du bloc allongé.

Dans une autre variante de réalisation, les découpures sont des rainures.

Du fait de leurs dimensions, les rainures ont une grande capacité d'évacuation de l'eau. En prévoyant d'alterner la sortie des rainures sur la première paroi latérale ou sur la seconde paroi latérale du bloc allongé, on vient limiter la perturbation de l'écoulement de l'eau dans les rainures circonférentielles délimitant ces parois latérales.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue partielle d'une bande de roulement, selon un premier mode de réalisation de l'invention ;
- la **figure 2** représente schématiquement une seconde variante de réalisation de l'invention ;
- la **figure 3** représente schématiquement une troisième variante de réalisation de l'invention ;
- la **figure 4** représente schématiquement une quatrième variante de réalisation de l'invention ;
- la **figure 5** représente schématiquement une cinquième variante de réalisation de l'invention ;
- la **figure 6** représente schématiquement une sixième variante de réalisation de l'invention.

Dans la description qui va suivre, des éléments sensiblement identiques ou similaires seront désignés par des références identiques.

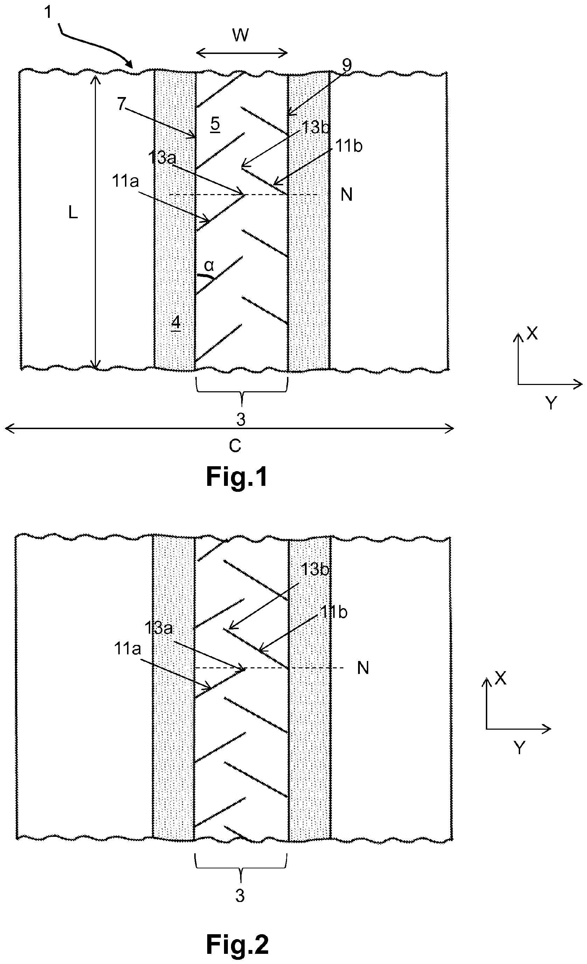

La **figure 1** représente une vue partielle d'une bande de roulement 1 d'un pneumatique selon un premier mode de réalisation de l'invention.

La bande de roulement 1 comporte au moins un bloc allongé 3 en matériau caoutchoutique. Le bloc allongé 3 est ici délimité par deux rainures 4 qui ont été ici grisées sur la **figure 1** pour favoriser la compréhension de l'invention. Le bloc allongé 3 présente une largeur W et une longueur L, cette longueur L étant très supérieure à la largeur W. Par très supérieure, on entend que la longueur L est au moins égale à 5 fois la largeur W. De cette manière, lorsque la bande de roulement 1 est montée sur un pneumatique, le bloc allongé 3 a l'allure d'une bande s'étendant selon une direction circonférentielle X. Cette bande peut s'étendre sur toute la circonférence du pneumatique et le bloc allongé correspond alors à une nervure. En variante, cette bande s'étend sur une partie seulement de cette circonférence.

Le bloc allongé 3 comporte une surface de contact 5 destinée à venir en contact avec un sol et une première paroi latérale 7 et une seconde paroi latérale 9 délimitant cette surface de contact 5. Le bloc allongé 3 comporte en outre une pluralité de découpures obliques 11a, 11b débouchant alternativement sur la première paroi latérale 7 ou sur la seconde paroi latérale 9 et s'étendant jusqu'à des extrémités 13a, 13b de découpures qui ne débouchent pas sur les parois latérales 7, 9.

Les découpures 11a, 11b sont réparties sur la surface de contact 5 de sorte que lorsqu'une découpure 11a atteint son extrémité de découpure 13a, une autre découpure 11b débute à partir d'une paroi latérale 9, à un même niveau N circonférentiel sur le bloc allongé 3. Ainsi, lorsqu'on projette les découpures 11a, 11b selon la direction circonférentielle X, il n'y a pas de superposition de découpures selon cette direction circonférentielle X. De cette manière, on limite la variation du taux d'entaillement dans le bloc allongé 3 selon cette direction circonférentielle. On notera également que comme les découpures 11a, 11b ne débouchent pas à la fois sur les deux parois latérales 7, 9, on s'assure d'une bonne rigidité globale du bloc allongé 3.

Les découpures 11a, 11b atteignent leur paroi respective 7, 9 en formant un angle α avec le bloc allongé.

Dans un mode de réalisation non limitatif, l'angle α est supérieur ou égal à 55°.

La **figure 2** présente une variante de réalisation dans laquelle on donne une longueur suffisante à au moins une des découpures 11a, 11b de sorte qu'il y a superposition de ces découpures selon une projection transversale, c'est-à-dire selon la direction transversale Y.

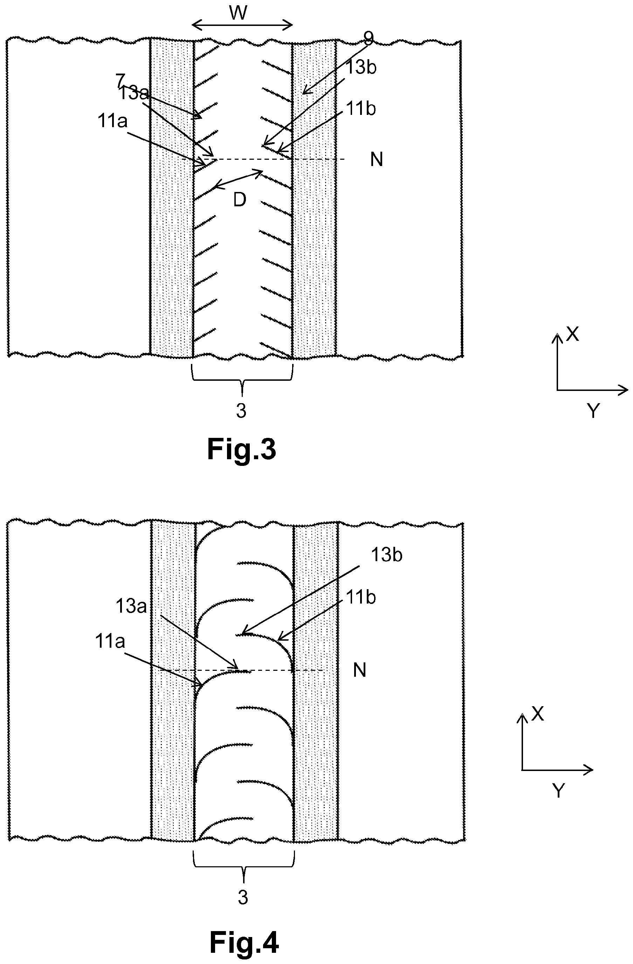

A l'inverse, **la** **figure 3** présente une variante dans laquelle les longueurs des découpures 11a, 11b sont réduites. Les extrémités 13a, 13b sont alors distantes d'une distance D. Cette distance D présente une composante transversale au moins égale à 10% de la largeur W du bloc allongé.

La **figure 4****,** présente une autre variante de réalisation dans laquelle les découpures ont une forme courbe.

Dans un mode de réalisation non limitatif, les découpures sont complexes et elles comportent au moins deux parties d'inclinaisons différentes.

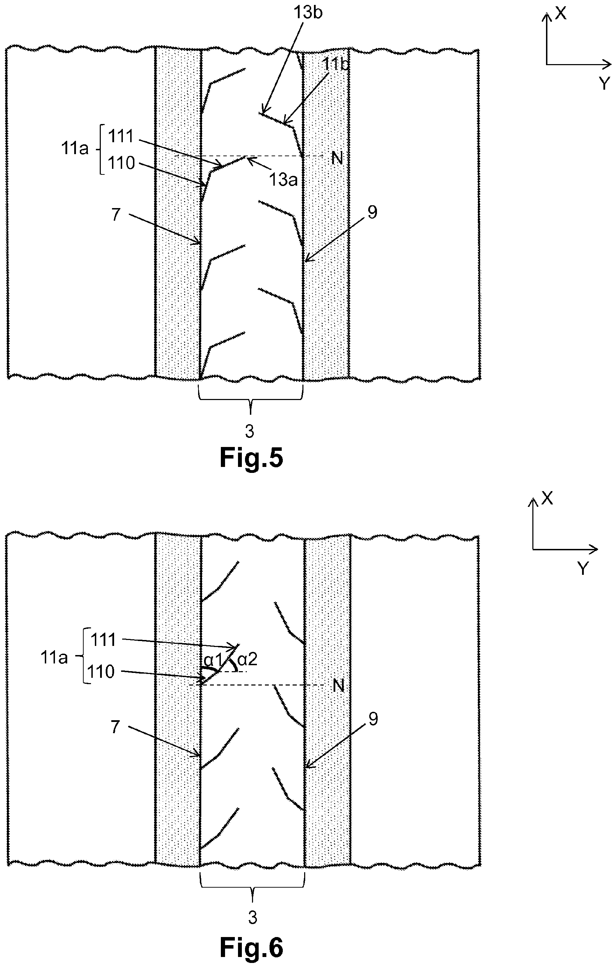

Dans un autre mode de réalisation non limitatif illustré à la **figure 5****,** les découpures 11a comportent uniquement une première partie 110 et une seconde partie 111. La première partie 110 de la découpure 11a débute à partir d'une des parois latérales 7 du bloc allongé et la seconde partie 111 prolonge la première partie 110 en direction de l'autre paroi latérale 9. La première p artie 110 et la seconde partie 111 comportent deux angles d'inclinaisons différents.

Dans un mode de réalisation non limitatif illustré à la **figure 6****,** la première partie 110 de la découpure 11a fait un premier angle α1 avec le bloc allongé, c'est-à-dire avec la direction circonférentielle X. Ce premier angle α1 est supérieur ou égal à 55°. De cette manière, on évite la création d'une zone de gomme mince et fragile entre la découpure 11a et la paroi latérale 7 du bloc allongé.

Dans un autre mode de réalisation, la seconde partie 111 fait un second angle α2 avec la direction transversale Y. Ce second angle α2 est supérieur ou égal à 55°.

Des combinaisons d'incisions présentant des inclinaisons différentes, et/ou des formes différentes et/ou des longueurs différentes sont possibles. On diminue les émergences remarquables du spectre du bruit de la bande de roulement, le brouillage du signal sonore émis par la sculpture du pneumatique est alors amélioré.

Dans un autre mode de réalisation, il est par exemple possible de prévoir que les découpures sont chanfreinées sur la surface de contact du bloc allongé.

## Revendications

1. Bande de roulement pour pneumatique comportant au moins un bloc (3) allongé en matériau caoutchoutique de largeur W et de longueur L avec L>>W, ce bloc allongé s'étendant selon une direction circonférentielle (X) lorsque la bande de roulement (1) est montée sur le pneumatique, le bloc allongé (3) comportant une surface de contact (5) destinée à venir en contact avec un sol et une première paroi latérale (7) et une seconde paroi latérale (9) délimitant cette surface de contact (5), le bloc allongé (3) comportant une pluralité de découpures obliques (11a, 11b) débouchant alternativement sur la première paroi latérale (7) ou sur la seconde paroi latérale (9) et s'étendant jusqu'à des extrémités (13a, 13b) de découpures qui ne débouchent pas sur lesdites parois latérales (7, 9), **caractérisée en ce que** les découpures de la pluralité de découpures (11a, 11b) se succèdent longitudinalement sur la surface de contact (5) du bloc de sorte que lorsqu'une découpure (11a), débouchant sur la première paroi latérale 7, atteint son extrémité de découpure (13a) une autre découpure (11b) débute à partir de la seconde paroi latérale (9), à un même niveau circonférentiel (N) sur le bloc allongé (3) et **en ce que** les découpures (11a, 11b) sont des incisions.

2. Bande de roulement selon la revendication 1, **caractérisée en ce que** les découpures (11a, 11b) forment un angle α avec la direction circonférentielle (X), ledit angle α étant supérieur ou égal à 55°.

3. Bande de roulement selon l'une des revendications 1 à 2, **caractérisée en ce que** deux découpures (11a, 11b) qui se succèdent longitudinalement dans le bloc allongé se recouvrent selon une direction transversale Y.

4. Bande de roulement selon l'une des revendications 1 à 2, **caractérisée** en ce les extrémités de deux découpures (11a, 11b) qui se succèdent longitudinalement dans le bloc allongé sont distantes d'une distance D, cette distance D ayant une composante selon une direction transversale Y au moins égale à 10% de la largeur W du bloc allongé.

5. Bande de roulement selon l'une des revendications 1 à 4, **caractérisée en ce que** les découpures ont une forme courbe sur la surface de contact (5).

6. Bande de roulement selon l'une des revendications 1 à 5, **caractérisée en ce que** les découpures comportent au moins deux parties d'inclinaisons différentes.

7. Bande de roulement selon l'une quelconque des revendications 1 à 6, **caractérisée en ce que** les découpures (11a, 11b) comportent uniquement une première partie (110) et une seconde partie (111), la première partie (110) débutant à partir d'une paroi latérale (7) du bloc allongé (3).

8. Bande de roulement selon la revendication 7, **caractérisée en ce que** la première partie (110) de la découpure (11a) fait un premier angle α1 avec la direction circonférentielle (X), ledit premier angle α1 étant supérieur ou égal à 55°.

9. Bande de roulement selon la revendication 8, **caractérisée en ce que** la seconde partie (111) fait un second angle α2 avec la direction transversale Y, ledit second angle α2 étant supérieur ou égal à 55°.

10. Bande de roulement selon l'une des revendications 1 à 9, **caractérisée en ce que** deux découpures adjacentes dans le bloc allongé présentent des inclinaisons différentes et/ou des formes différentes et/ou des longueurs différentes.

11. Bande de roulement selon l'une des revendications 1 à 10, **caractérisée en ce que** le bloc allongé (3) est une nervure.

## Patentansprüche

1. Reifenlaufstreife, umfassend mindestens einen länglichen Block (3) aus Gummimaterial der Breite W und Länge L mit L »W, wobei sich dieser längliche Block in Umfangsrichtung (X) erstreckt, wenn das Laufstreife (1) auf dem Reifen montiert ist, wobei der längliche Block (3) eine Kontaktfläche (5) umfasst, die mit einem Boden in Kontakt kommen soll, und eine erste Seitenwand (7) und eine zweite Seitenwand (9), die diese Kontaktfläche begrenzt (5) wobei der längliche Block (3) mehrere schräge Ausschnitte (11a, 11b) umfasst, die sich abwechselnd an der ersten Seitenwand (7) oder an der zweiten Seitenwand (9) öffnen und sich zu den Enden erstrecken (13a, 13b) von Ausschnitten, die nicht zu den Seitenwänden (7, 9) führen, **dadurch gekennzeichnet, dass** die Ausschnitte der mehreren Ausschnitte (11a, 11b) in Längsrichtung auf der Kontaktfläche (5) des Blocks aufeinander folgen so dass bei einem Ausschnitt (11a), das sich an der ersten Seitenwand 7 öffnet, erreicht sein Schnittende (13a). Ein weiterer Auschnitt (11b) beginnt an der zweiten Seitenwand (9) auf derselben Umfangsebene (N) an der länglicher Block (3) und darin sind die Ausschnitte (11a, 11b) Einschnitte.

2. Laufstreife nach Anspruch 1, **dadurch gekennzeichnet, dass** die Ausschnitte (11a, 11b) mit der Umfangsrichtung (X) einen Winkel a bilden, wobei der Winkel a größer oder gleich 55 ° ist.

3. Laufstreife nach einem der Ansprüche 1 bis 2, **dadurch gekennzeichnet, dass** sich zwei Ausschnitte (11a, 11b), die in dem länglichen Block in Längsrichtung aufeinander folgen, in Querrichtung Y überlappen.

4. Laufstreife nach einem der Ansprüche 1 bis 2, **dadurch gekennzeichnet, dass** die Enden von zwei Ausschnitten (11a, 11b), die in dem länglichen Block in Längsrichtung aufeinander folgen, um einen Abstand D beabstandet sind, wobei dieser Abstand D eine Komponente gemäß aufweist eine Querrichtung Y, die mindestens 10% der Breite W des länglichen Blocks entspricht.

5. Laufstreife nach einem der Ansprüche 1 bis 4, **dadurch gekennzeichnet, dass** die Ausschnitte auf der Kontaktfläche (5) eine gekrümmte Form aufweisen.

6. Laufstreife nach einem der Ansprüche 1 bis 5, **dadurch gekennzeichnet, dass** die Ausschnitte mindestens zwei Teile unterschiedlicher Neigung umfassen.

7. Laufstreife nach einem der Ansprüche 1 bis 6, **dadurch gekennzeichnet, dass** die Ausschnitte (11a, 11b) nur einen ersten Teil (110) und einen zweiten Teil (111) umfassen, wobei der erste Teil (110) bei beginnt von einer Seitenwand (7) des länglichen Blocks (3).

8. Laufstreife nach Anspruch 7, **dadurch gekennzeichnet, dass** der erste Teil (110) des Ausschnitts (11a) einen ersten Winkel α1 mit der Umfangsrichtung (X) bildet, wobei der erste Winkel α1 größer oder gleich 55 ° ist.

9. Laufstreife nach Anspruch 8, **dadurch gekennzeichnet, dass** der zweite Teil (111) einen zweiten Winkel α2 mit der Querrichtung Y bildet, wobei der zweite Winkel α2 größer oder gleich 55 ° ist.

10. Laufstreife nach einem der Ansprüche 1 bis 9, **dadurch gekennzeichnet, dass** zwei benachbarte Ausschnitte in dem länglichen Block unterschiedliche Neigungen und / oder unterschiedliche Formen und / oder unterschiedliche Längen aufweisen.

11. Laufstreife nach einem der Ansprüche 1 bis 10, **dadurch gekennzeichnet, dass** der längliche Block (3) eine Rippe ist.

## Claims

1. Tire tread comprising at least one elongated block (3) of rubber material of width W and length L with L >> W, this elongated block extending in a circumferential direction (X) when the tread (1) is mounted on the tire, the elongated block (3) comprising a contact surface (5) intended to come into contact with a ground and a first side wall (7) and a second side wall (9) delimiting this contact surface (5), the elongated block (3) comprising a plurality of oblique cutouts (11a, 11b) opening alternately on the first side wall (7) or on the second side wall (9) and extending to the ends (13a, 13b) of cutouts which do not lead to said side walls (7, 9), **characterized in that** the cutouts of the plurality of cutouts (11a, 11b) follow one another longitudinally on the contact surface (5) of the block so that when a cutout (11a), opening on the first side wall 7, reaches its cut end (13a) another cutout (11b) starts from the second side wall (9), at the same circumferential level (N) on the elongated block (3) and **in that** the cutouts (11a, 11b) are incisions.

2. Tread according to claim 1, **characterized in that** the cutouts (11a, 11b) form an angle a with the circumferential direction (X), said angle a being greater than or equal to 55 °.

3. Tread according to one of claims 1 to 2, **characterized in that** two cutouts (11a, 11b) which follow one another longitudinally in the elongated block overlap in a transverse direction Y.

4. Tread according to one of claims 1 to 2, **characterized in that** the ends of two cutouts (11a, 11b) which follow one another longitudinally in the elongated block are spaced by a distance D, this distance D having a component according to a transverse direction Y at least equal to 10% of the width W of the elongated block.

5. Tread according to one of Claims 1 to 4, **characterized in that** the cutouts have a curved shape on the contact surface (5).

6. Tread according to one of claims 1 to 5, **characterized in that** the cutouts comprise at least two parts of different inclinations.

7. Tread according to any one of Claims 1 to 6, **characterized in that** the cutouts (11a, 11b) only comprise a first part (110) and a second part (111), the first part (110) starting at from a side wall (7) of the elongated block (3).

8. Tread according to claim 7, **characterized in that** the first part (110) of the cutout (11a) makes a first angle α1 with the circumferential direction (X), said first angle α1 being greater than or equal to 55 °.

9. Tread according to claim 8, **characterized in that** the second part (111) makes a second angle α2 with the transverse direction Y, said second angle α2 being greater than or equal to 55 °.

10. Tread according to one of claims 1 to 9, **characterized in that** two adjacent cutouts in the elongated block have different inclinations and / or different shapes and / or different lengths.

11. Tread according to one of Claims 1 to 10, **characterized in that** the elongated block (3) is a rib.
